# EUROPEAN PATENT APPLICATION

(11) **EP 4 105 749 A1**
(43) Date of publication of application: **21.12.2022**
(21) Application number: 21179760.0
(22) Date of filing: 16.06.2021
(51) Int. Cl.: G05B 23/02, G06F 11/00, G06F 11/07, G06F 30/33

(54) **A SELECTIVE OR GATE FOR COMPLEX FAILURE PROPAGATIONS**

(71) Applicant: Siemens Aktiengesellschaft, 80333 München (DE)
(72) Inventor: Höfig, Kai, 83101 Rohrdorf (DE); Zeller, Marc, 81243 München (DE)

(57) **Abstract**

The invention discloses a computer implemented method for simulation and modelling component failures and system hazards of a technical system, comprising a software-based selective OR gate (SOR) which bundles OR gates (OR1 - OR3) of a software-based component fault tree in one element, whereby the selective OR gate (SOR) is configurable by a matrix-based look-up table expressing input (in1 - in3, A - D) and output (out1 - ou3) relations of the OR gates (OR1 - OR3).

The invention further discloses a computational device performing the method, a usage of the computational device, a corresponding computer program product and a corresponding computer program code.

## Description

### FIELD OF THE INVENTION

The present invention relates to a computer implemented method for simulation and modelling component failures and system hazards of a technical system. The invention further relates to a computational device performing the method, a usage of the computational device, a corresponding computer program product and a corresponding computer program code.

### BACKGROUND OF THE INVENTION

The complexity of today's technical systems in continuously growing. In complex applications, often model-based development is used to break down complexity to a manageable measure. SysMLv1.x or the upcoming SysMLv2 is a popular way to do so in many engineering applications. One of the most popular diagrams is the so-called SysML Block Definition Diagram, that shows the components of a system and their interfaces and dependencies to other components.

On the one hand, a complex system can be decomposed by using components, interfaces, and connections, but on the other hand, non-functional properties, e.g., functional safety, remain complex and a decomposed system does not support analyses for non-functional properties.

One method, to integrate such decomposed model-based systems and safety analysis are Component Fault Trees (CFTs). Using this methodology, CFTs use the component, interfaces, and dependencies from the logical decomposition of the complex system to document the failure propagation through the logical model. In this way, the decomposition of the complex system can be used to decrease the level of complexity and divide it into manageable parts while also decomposing the failure analysis model.

Fault tree analysis (FTA) is a top-down, deductive failure analysis in which an undesired state of a system is analyzed using Boolean logic to combine a series of lower-level events. This analysis method is mainly used in safety engineering and reliability engineering to understand how systems can fail, to identify the best ways to reduce risk and to determine (or get a feeling for) event rates of a safety accident or a particular system level (functional) failure. FTA is used for example in the aerospace, nuclear power, chemical and process, pharmaceutical, petrochemical, and other high-hazard industries; but is also used in fields as diverse as risk factor identification relating to social service system failure. FTA is also used in software engineering for debugging purposes and is closely related to cause-elimination technique used to detect bugs.

Nevertheless, since failures, that appear at components at the beginning of a causality path through the system, directly influence the failure behavior of the system. For example, if a single sensor that provides input to a system has failed, then a system could directly loose its ability to function properly. Using a component fault tree model, the sensor failure must propagate through all components that are on the way up to the output component of the system. This is a common pattern during the modelling of the failure propagation model (e.g., for CFTs) and can result in many failures that have to be routed through a component, what makes the modeling error prone, hard to maintain and comprehend.

With Component Fault Trees (CFTs) there is a model- and component-based methodology available to model cause-effect-relationships for individual failures and system hazards, which supports reuse by a modular and compositional safety analysis strategy. Due to the failure propagation approach CFTs are also particularly well suited to model and document failure mitigation strategies on different levels of the system. Based on the description of the cause-effect-relationships in form of a CFT both Fault Trees and FME(D)As can be generated.

Component Fault Trees are Boolean models associated with system development elements such as components, as described in Kaiser, B., Liggesmeyer, P., & Mäckel, O. (2003); A new component concept for fault trees. SCS '03: Proceedings of the 8th Australian workshop on Safety critical systems and software (S. 37-46), Australian Computer Society, Inc. and Kaiser, B., Schneider, D., Adler, R., et. Al. (2018); Advances in Component Fault Trees. Safety and Reliability - Safe Societies in a Changing World, Proceedings of ESREL 2018, (pages 815-823).

In CFTs, a separate so-called CFT element is related to a component (or any other kind of design artifact, Adler, R., Domis, D., Höfig, K., Kemmann, S., Kuhn, T., Schwinn, J.-P., & Trapp, M. (2011). Integration of Component Fault Trees into the UML. In J. Dingel, & A. Solberg, Models in Software Engineering (S. 312-327). Springer Berlin Heidelberg.

Failures that are visible at the outport of a component are modeled using Output Failure Modes which are related to the specific outport. To model how specific failures propagate from an import of a component to the outport, Input Failure Modes are used. The internal failure behavior that also influences the output failure modes is modeled using Boolean gates such as OR, AND, and M-out-of-N as well as so-called Basic Events. Basic Events model failure modes that originate within a component. Each Basic Event can be assigned a failure rate, e.g., the *Mean Time Between Failures (MTBF)* or the *Failure In Time (FIT).* In case of an OR gate a failure propagates if at least one of the inputs is active, while an AND gate propagates failures only if all input failures are active.

The failure propagation within a technical system is described by means of the CFT methodology.

### SUMMARY OF THE INVENTION

The objective of the present invention is to provide a solution for improving failure propagation analysis in a technical system using a component fault tree.

To accomplish the objective, the present invention provides a solution according to the independent claims. Advantageous embodiments are provided in the dependent claims.

According to the primary aspect of the invention, a new gate, called Loop-Through-Gate (LOOT gate) or selective OR gate (SOR gate), is disclosed, that overcomes the described problems and makes modelling and analysis easy to comprehend, less error prone, and manageable without losing any precision of the analysis. To achieve this, the LOOT/SOR gate bundles multiple OR gates of a component fault tree in a single element. This element is configured using a matrix-based approach to express any combination of one or multiple gates.

With the LOOT/SOR gate approach, the complexity of CFT diagrams can be reduced significantly. Therefore, the diagrams can be created, reviewed, and maintained with less effort. Hence, RAMS (= reliability, availability, maintainability, and safety) experts need less time to create CFT-based RAMS analyses for complex technical systems. Moreover, the diagrams contain less elements and thus are easier to understand in a review process. Furthermore, the matrix-based configuration of a LOOT/SOR gate can be changed with less clicks than adapting a CFT with multiple elements.

Overall, the approach reduces the effort to create reoccurring structures in large CFT models which are unavoidable in today's complex technical systems. Hence, the effort for building CFTs can be reduced and the experts can focus on the important parts of the CFT model. Especially, if a complex technical system (such as an electrical/electronical systems of a high-speed train) must be analyzed on a detailed physical level, in which each electronic component and its failure behavior must be described, the approach significantly reduces the modeling effort to create the CFT.

Technical system is an interdisciplinary basic term for the description of technical products. As a comprehensive representational term, it is used to indicate the interaction of several technical components (e.g., machines, equipment, components, etc.) in a larger unit (plant, machine, appliance, etc.). In the sense of system-theoretical abstraction, technical system is an image (model) of a usually complex technical product. The interactions between the components of the system and between the system and its environment are mapped and investigated. The interactions occur through substance, energy and/or information flow.

The invention claims a computer implemented method for simulation and modelling component failures and system hazards of a technical system, comprising a software-based selective OR gate which bundles OR gates of a software-based component fault tree in one element, whereby the selective OR gate is configurable by a matrix-based look-up table expressing input and output relations of the OR gates.

The OR gate is a digital logic gate that implements logical disjunction. A HIGH output results if one or more of the inputs to the gate are HIGH. If no input is high, a LOW output results.

A technical system is for example an industrial system like a computer, a manufacturing line or a power generating plant as well as a communication system. A component is any part of such a technical system, for example any kind of sensor, a power drive, a semiconductor, etc.

In a further embodiment of the method the component fault tree comprises software representations of components, interfaces, and dependencies from the logical decomposition of the technical system to document the failure propagation through the logical model.

In a further embodiment of the method each row of the look-up table represents an input failure mode or an internal component failure mode to the selective OR gate while each column of the look-up table represents an output failure mode of the selective OR gate.

Thus, cells in the look-up table define, if a failure ("HIGH") from the input side of the selective OR gate is available (as "HIGH") at the output side of the selective OR gate.

In a further embodiment of the method many component failure trees are concatenated to represent a failure tree of the technical system.

In a further embodiment of the method the technical system is an industrial system, especially chemical production system, power generation systems, vehicle manufacturing system.

In a further embodiment of the method the component of the component fault tree is an electrical and/or electronic component.

The invention further claims a computational device, such as a personal computer, configured to perform a method according to the invention.

The invention further claims a usage of the computational device to simulate and to model a failure behavior of the technical system.

The invention further claims a computer program product comprising instructions which, when the program is executed by a computational device, cause the computational device to carry out the steps of the method according to the invention

The invention further claims a computer-readable storage medium comprising instructions which, when executed by a computational device, cause the computational device to carry out the steps of the method according to the invention.

Further benefits and advantages of the present invention will become apparent after a careful reading of the detailed description with appropriate reference to the accompanying drawings.

BRIEF DESCRIPTION OF THE DRAWINGS
- FIG. 1: shows a component failure tree according to state of the art,
- FIG. 2: shows a component failure tree with a selective OR gate and
- FIG. 3: shows the look-up table for the selective OR gate.

### DETAILED DESCRIPTION OF THE INVENTION

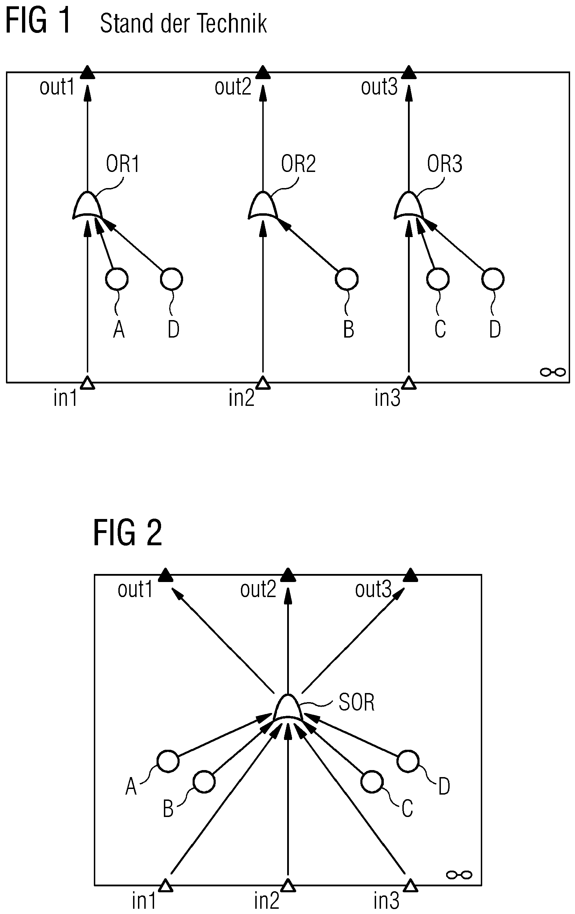

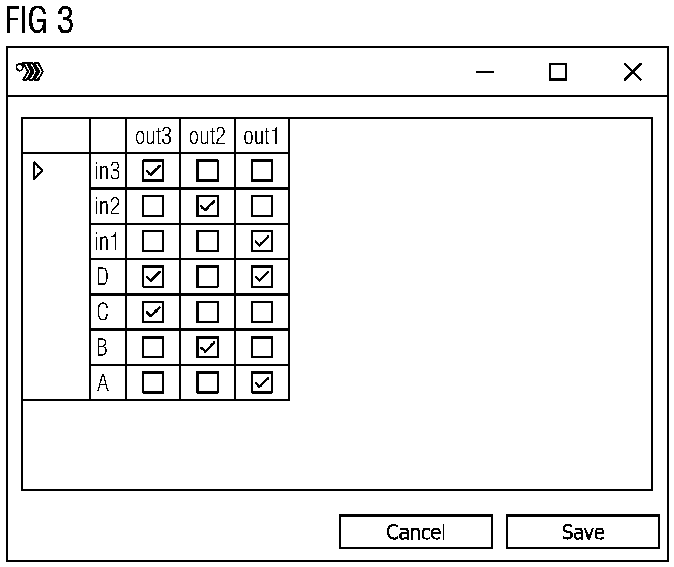

As an embodiment of the invention FIG. 2 and FIG. 3 illustrate the usage of a selective OR gate SOR. A component failure tree according to state of the art (FIG. 1) consists (in this example) of three input failure modes (first input failure mode in1, second input failure mode in2, and third input failure mode in3) as well as of three output failure modes (first output failure mode out1, second failure mode out2, and third failure mode out3).

Moreover, there are four internal failures of the component defined in the component failure tree (first internal component failure A, second internal component failure B, third internal component failure C, and forth internal component failure D). To interconnect output failure modes out1 to out3 with input failure modes in1 to in3 and internal component failures A to D three OR gates (first OR gate OR1, second OR gate OR2, and third OR gate OR3) are used. Hence, with a growing number of input and output failure modes in a component failure tree element, also the number of OR gates is increasing. This leads to component failure trees with a lot of OR gates.

According to the invention, the same component failure tree element can be expressed using a selective OR gates SOR as shown in FIG. 2. Instead of multiple OR gates OR1 to OR3, the selective OR gate SOR is included in the component failure tree and represents all OR gates OR1 to OR3.

The selective OR gate SOR is configured with a matrix-based approach using the table of FIG. 3. In this table, each row represents an input in1 to in3, A to D to the selective OR gate SOR while each column represents the outputs out 1 to out3 of the selective OR gate SOR. Thus, each cell in the table defines, if an input in1 to in3, A to D to the selective OR gate SOR is connected with the respective output of the OR gate OR1 to OR3. Since more than one input can be connected to an output, the inputs are connected to output via an OR gate. Hence, instead of explicitly represent each OR gate OE1 to OR3 in the component failure tree diagram, the relationship of the elements is represented by the selective OR gate and this table.

When doing a qualitative or quantitative FTA (Fault Tree Analysis) with the component fault tree model the selective OR gate SOR is transformed into a set of one or multiple OR gates OR1 to OR3 according to the configured matrix of the selective OR gate SOR. In this example, the table represents the component failure tree in/out example of FIG. 1.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### LIST OF REFERENCE SIGNS

- A: first internal component failure
- B: second internal component failure
- C: third internal component failure
- D: fourth internal component failure
- in1: first input failure mode
- in2: second input failure mode
- in3: third input failure mode
- OR1: first OR gate
- OR2: second OR gate
- OR3: third OR gate
- out1: first output failure mode
- out2: second output failure mode
- out3: third output failure mode
- SOR: selective OR gate

## Claims

1. A computer implemented method for simulation and modelling component failures and system hazards of a technical system, comprising a software-based selective OR gate (SOR) which bundles OR gates (OR1 - OR3) of a software-based component fault tree in one element, whereby the selective OR gate (SOR) is configurable by a matrix-based look-up table expressing input (in1 - in3, A - D) and output (out1 - ou3) relations of the OR gates (OR1 - OR3).

2. The method according to claim 1,
whereby the component fault tree comprises software representations of components, interfaces, and dependencies from the logical decomposition of the technical system to document the failure propagation through a logical model of the technical system.

3. The method according to claim 1 or 2,
whereby each row of the look-up table represents an input failure mode (in1 - in3) or an internal component failure mode (A - D) to the selective OR gate (SOR) while each column of the look-up table represents an output failure mode (out1 - out3) of the selective OR gate (SOR).

4. The method according to one of the previous claims, whereby many component failure trees are concatenated to represent a failure tree of the technical system.

5. The method according to one of the previous claims, whereby the technical system is an industrial system, especially chemical production system, power generation systems, vehicle manufacturing system.

6. The method according to one of the previous claims, whereby the component of the component fault tree is an electrical and/or electronic component.

7. A computational device configured to perform the method according to one of the previous claims.

8. Using the computational device of claim 7 to simulate and to model a failure behavior of the technical system.

9. A computer program product comprising instructions which, when the program is executed by a computational device, cause the computational device to carry out the steps of the method according to one of the claims 1 to 6.

10. A computer-readable storage medium comprising instructions which, when executed by a computational device, cause the computational device to carry out the steps of the method of claim according to one of the claims 1 to 6.
